# EUROPEAN PATENT SPECIFICATION

(11) **EP 1 712 146 B1**
(45) Date of publication and mention of the grant of the patent: **10.12.2008**
(21) Application number: 05425404.0
(22) Date of filing: 31.05.2005
(51) Int. Cl.: A43B 3/12, B29D 31/50, A43C 11/02

(54) **Footwear in plastic made by pressure casting with fastening supports**
Kunststoffschuhwerk aus Druckgussverfahren mit Befestigungsmittel
Chaussure en plastique fabriquée par moulage avec supports de fixation

(30) Priority: 14.04.2005 IT PI20050008
(43) Date of publication of application: 18.10.2006
(73) Proprietor: Giannoni Group S.r.l., 50051 Castelfiorentino (FI) (IT)
(72) Inventor: Montalbano, Maria Angela, 50053 Empoli (FI) (IT)
(74) Representative: Turini, Laura

(56) References cited:
- DE-U- 1 770 522
- DE-U- 1 772 904
- US-A- 5 852 885
- US-A1- 2001 001 350
- US-A1- 2004 231 190
- US-A1- 2005 097 781

## Description

### Technical Field

The present invention concerns the technical sector relative to the production of footwear and specifically of plastic footwear, such as clogs, sandals and similar.

In particular, this invention concerns the specific production of footwear in antistatic plastic material, made by pressure casting and commonly used by health workers in hospitals or closed health structures, where the bacterial hygienic control is very important. Despite this particular purpose, this footwear has also conquered a wider public, beyond that specific sector, thanks to its comfortable and practical use. It has the main characteristic to be simply manufactured, in this specific case with a single material, with surfaces easy to clean and accurately disinfect, features that, together with the above-mentioned comfort, make it essential in the clothing of hospital personnel or anyone standing for many hours during the day.

This product is perfect in rooms with specific bacterial hygienic needs, such as certain hospital wards and obviously the operating theatres. It's certainly easier to clean and sterilize footwear homogeneously manufactured, stamped, with no seams and no porous or absorbing materials, or however shaped so that it creates few bends or small gaps, natural receptacles of impurity, which make the cleaning and sterilizing operations more complex.

### Background Art

Nowadays, this footwear is almost totally made in plastic material, by pressure casting, except for the strap, which is made apart, in a second manufacturing phase, and then soldered to the inner surface of the footwear, while, when put on, it passes on the back over the heel and is closed by a buckle on the external side of the same footwear.

Footwear according to the preamble of claim 1 is disclosed in US 2001/0001350.

Unfortunately, this manufacturing technology necessarily alters the above-mentioned characteristics of uniform and simple maintenance when cleaning the product, by overlapping different materials, creating bends and small gaps possible receptacles of germs and bacteria. In addition, the fastening of the buckle on the external part of the footwear is often made of metal, like in the common shoes with similar type of fastening. Which eventually involves an inevitable oxidation of the footwear and makes it not suitable for certain purposes when it's necessary to eliminate all the infecting agents.

Furthermore, the current manufacturing technology, generally designed for the production in a single body of the footwear, needs a different manufacturing process for strap and buckle, involving more and different working phases, since it's later necessary to apply the buckle to the inside. This process can be carried out either by seam, with the above-described hygienic consequences, or by soldering, with the technological need to find materials anyway compatible with casting. Which not only involves a further manufacturing process generating costs, but it's also always still subject, like all the varied components, to possible divisions, cuts, breaks or manufacturing imperfections that make it a critical point of resistance in time. As a matter of fact, the buckle cannot be realized with the same material as the footwear, because the soft plastic wouldn't realize a firm clasp of the strap, coming out from its place and so leaving the foot free. Therefore, the buckle must be made of more rigid plastic that, being different from the plastic used for the footwear, cannot be soldered to it, but must be closed by other means and principally by a metal rivet subject to wear and tear, oxidation and other technical problems.

From the opposite side of the footwear, the one holding the fastening, the use of the metal buckle, naturally subject to corrosion, not only endangers the total safety of the footwear, but this accessory also needs a separate element, fixed to the external side of the clog, which involves all the problems already described in the rough fastening of the buckle.

In practice, this drawback is confirmed by the fact that the fastening strap is often ignored or removed, if existing, or even eliminated at all by choosing a different kind of footwear without it.

### Disclosure of invention

This invention aims at solving the above-mentioned and other drawbacks, supplying footwear made by plastic pressure casting, comprising in a single body all the essential elements that allow the fastening of the strap over the heel. In particular, in said footwear, both the strap and the buckle are realized by the same plastic pressure casting employed for the footwear.

The advantages resulting from the present invention essentially consist of the fact that it's possible to eliminate the metal components and realize footwear completely made of plastic; that it's easy to wear and easy to clean and sterilize, thanks to its manufacturing uniformity; that the production costs are reduced, avoiding operations of soldering, sewing or rivets, using for the fastening support the same plastic material used for the footwear. In addition, said footwear realized in a single body, involves a minimum risk of break in critical points, differently from the shoes assembled with various supports.

This invention consists of footwear in plastic, made by pressure casting. In the internal back portion, the strap (3) is applied at suitable height for closing the ankle. Said strap, having prefixed length according to the various physical needs, extends from the wearing edge until it fastens by suitable buckle (4) over one of the buttons (6) placed on the same buckle. Said buckle (4) is made in a single body and has a surface (8) comprising one or more buttons (6), for fastening the strap, and a loop (7). Said surface (8) also comprises a buttonhole (5) for the insertion of the button (2), also realized by the same pressure casting employed for the footwear.

The flexible, soft, antistatic and rough stamped surfaces making the footwear, are suitable for its purposes, both in the portion holding the foot, obviously anatomically shaped, and in the fastening strap that is elastic and soft so as not to cause unpleasant sensations in contact with the user's heel.

On the contrary, the detail of the buckle fixing the strap to the button is conveniently made of plastic material being harder and stiffer, which ensures a longer life and a safer hold, without causing any physical trouble, since this support is out of the footwear and not in direct contact with the foot.

Reduced to its essential structure and with reference to the figures of the enclosed drawings, the footwear in plastic made by pressure casting, according to the invention, includes on its body a back strap (3), passing over the heel, and a button (2), extending on the opposite side to the one where the strap starts out, which is inserted by pressure into the buttonhole (5) of a buckle inside which the open end of the same strap stops. All these components are made by the same plastic pressure casting used for the footwear.

Conveniently, the strap (3) starts out from one side of the footwear and proceeds with a compatible direction and for a prefixed length sufficient to cover the back portion of the foot. Said strap extends from the wearing edge until it fastens, by suitable buckle (4), over one of the buttons (6) placed on the same buckle.

Said buckle (4) is made in a single body in stiffer plastic material than the one used for the footwear and has a surface (8) comprising one or more buttons (6) for fastening the strap, a loop (7) and a buttonhole (5) for the insertion of the button (2).

The projecting button (2), realized by pressure casting together with the footwear, can have any shape as long as it enters the buttonhole (5) on the buckle. Said button can either be circular, square, hexagonal or have any other shape providing it is realized in a single body with the footwear. This button is made of a body and a projecting head, greater than the body, which, thanks to the elastic material it is made of, perfectly enters the buttonhole (5) extending later beyond that and locking the buckle.

The footwear includes a supporting base, of standard thickness, internally shaped for getting an anatomical sole, and a top surface, less thick and sufficiently soft. From the inner portion of this top surface, the strap extends, suitably orientated, while on the outer part, there is a button similarly manufactured.

In order to fasten strap and button, we use a particular buckle made of plastic material, being stiffer and resistant to wear and tear, provided with a buttonhole for the simple insertion by pressure of the external button (2) of the footwear and, on the opposite side, with a loop (7) for the insertion of the strap of the footwear that, equipped with suitable holes, will find the right place for its size, regulated on shaped buttons (6), realized in the middle part of the same strap.

This invention, thanks to its characteristic of manufacturing in a single body, involves many economical advantages, avoiding successive necessary operations of soldering or sewing the fastening support. The same manufacturing characteristic guarantees a safer and longer life of the footwear, eliminating the critical points that naturally arise where different materials overlap.

This invention combines the soft wearing portion with the resistant and hard fastening support, the only detail not connected with the manufacturing. Thanks indeed to the particular type and material of the fastening support, this invention permits to prevent to use metal parts at all, but preserving the same functional efficacy, so avoiding natural oxidation and corrosion.

Conveniently, the single material used, together with the possibility given by the manufacturing technology of realizing the invention in a single body, permits to eliminate angles, gaps, "shadow" sectors or difficult to achieve, so as to easily get a perfect bacterial cleaning of the footwear, which makes it perfect for its specific purpose as well as for any other use.

In practice, the manufacturing details may however equally vary as regards shape, size, position of elements and type of materials used, but still remain within the range of the idea proposed as a solution and, consequently, within the limits of the protection granted by this patent for invention.

### Brief description of drawings

These and further advantages, purposes and characteristics of the present invention can be better understood by every expert in this field by reading the following description and referring to the enclosed drawings, given as practical examples of the invention, but not to be considered restrictive.

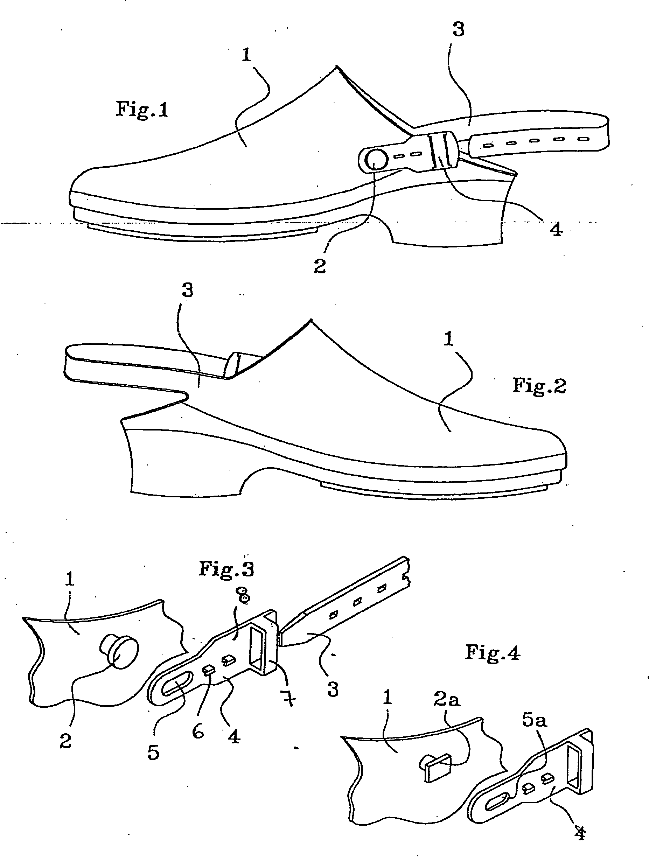

- **Fig. 1** shows a side external view of the footwear (1). On this side we can see the button (2), made by pressure casting together with the footwear, where the buckle (4) is fastened. Said buckle is an independent piece made of plastic material less flexible but more resistant. On the opposite side, still connected to the footwear (1) and manufactured by the same process, we have the strap (3) that is going to enter the buckle (4).
- **Fig. 2** shows the opposite side of the footwear (1), from the inside. It shows that no seams or soldering exist between the footwear (1) and the strap (3), said strap being integral part of the manufacturing by pressure casting.
- **Fig. 3** shows an exploded perspective view of the components: button (2) and strap (3) are integral parts of the footwear (1), while the buckle (4) is fixed to the button by means of the buttonhole (5), thanks indeed to the flexible and soft plastic of the same button, which is the same as the wearing portion of the footwear. The surface (8) of the buckle (4) also includes a loop (7) and one or more buttons (6) that enters one of the holes placed on the strap (3).
- **Fig. 4** shows how the button (2a) can have any shape as long as compatible with the buttonhole (5a) of the buckle (4) to insert.

## Claims

1. Footwear in plastic made by pressure casting including on its body a back strap (3), passing over the heel, and a button (2) **characterized in that** the strap (3) and the button (2) are an integral part of the footwear and are made by the same plastic pressure casting of the footwear and **in that** the button (2) is inserted into the buttonhole (5) of a buckle (4) and where the strap (3) can be fastened when inserted into the buckle (4).

2. Footwear in plastic made by pressure casting as claimed in claim 1, **characterized in that** the strap (3) starts out from one side of the footwear and proceeds with a compatible direction and for a prefixed length sufficient to cover the back portion of the foot; said strap extends from the wearing edge until it fastens, by suitable buckle (4), over one of the buttons (6) placed on the same buckle.

3. Footwear in plastic made by pressure casting as claimed in claim 1, **characterized in that** said buckle (4) is made in a single body in stiffer plastic material than the one used for the footwear and has a surface (8) comprising one or more buttons (6) for fastening the strap, a loop (7) and a buttonhole (5) for the insertion of the button (2).

4. Footwear in plastic made by pressure casting as claimed in claim 1, **characterized in that** the projecting button (2), realized by pressure casting together with the footwear, can have any shape as long as it enters the buttonhole (5) on the buckle.

5. Footwear in plastic made by pressure casting as claimed in claim 1, **characterized in that** this button is made of a body and a projecting head, greater than the body, which, thanks to the elastic material it is made of, perfectly enters the buttonhole (5) extending later beyond that and locking the buckle.

## Patentansprüche

1. Fußbekleidung aus Kunststoff, hergestellt durch Druckguss, die an ihrem Körper einen Hinterriemen (3), der über die Ferse verläuft, und einen Knopf (2) umfasst, **dadurch gekennzeichnet, dass** der Riemen (3) und der Knopf (2) ein fester Bestandteil der Fußbekleidung sind und in demselben Kunststoffdruckgussvorgang wie die Fußbekleidung hergestellt sind und **dadurch**, dass der Knopf (2) in die Knopföffnung (5) einer Schnalle (4) eingeführt ist, wo der Riemen (3) befestigt werden kann, wenn er in die Schnalle (4) eingeführt wird.

2. Fußbekleidung aus Kunststoff, hergestellt durch Druckguss, nach Anspruch 1, **dadurch gekennzeichnet, dass** der Riemen (3) an einer Seite der Fußbekleidung beginnt und in passender Richtung und mit einer festgelegten Länge verläuft, die ausreicht, um den hinteren Abschnitt des Fußes zu bedecken, wobei sich der Riemen von der Tragekante bis zu seiner Befestigung mit einer geeigneten Schnalle (4) über einen der Knöpfe (6) erstreckt, die auf derselben Schnalle angeordnet sind.

3. Fußbekleidung aus Kunststoff, hergestellt durch Druckguss, nach Anspruch 1, **dadurch gekennzeichnet, dass** die Schnalle (4) als Einzelkörper aus steiferem Material als das für die Fußbekleidung verwendete Material besteht und eine Oberfläche (8) aufweist, die einen oder mehrere Knöpfe (6) zum Befestigen des Riemens, eine Schlaufe (7) und ein Knopfloch (5) zum Einführen des Knopfes (2) umfasst.

4. Fußbekleidung aus Kunststoff, hergestellt durch Druckguss, nach Anspruch 1, **dadurch gekennzeichnet, dass** der hervorstehende Knopf (2), der im Druckguss zusammen mit der Fußbekleidung ausgeführt ist, jede Form aufweisen kann, sofern er in das Knopfloch(5) in der Schnalle hineinpasst.

5. Fußbekleidung aus Kunststoff, hergestellt durch Druckguss, nach Anspruch 1, **dadurch gekennzeichnet, dass** dieser Knopf aus einem Körper und einem hervorstehenden Kopf besteht, der größer ist als der Körper, welcher dank des elastischen Materials, aus dem er besteht, perfekt in das Knopfloch (5) passt und später darüber hinausragt und die Schnalle befestigt.

## Revendications

1. Chaussures en plastique créées par un moulage sous pression incluant sur l'objet une sangle à l'arrière (3), passant au dessus du talon et un bouton (2) **caractérisé en ce que** la sangle (3) et le bouton (2) soient une partie intégrale de la chaussure et soient faits par le même moulage sous pression du plastique de la chaussure de telle façon que le bouton (2) soit inséré dans la boutonnière (5) de la boucle (4) et où la sangle (3) peut être attachée lorsqu'elle est insérée dans la boucle (4).

2. Chaussures en plastique créées par un moulage sous pression comme affirmé dans la revendication 1, **caractérisé en ce que** la sangle (3) commence d'un côté de la chaussure et continue dans une direction compatible et pour une longueur déterminée suffisante pour couvrir la partie arrière du pied, ladite sangle s'étend du bord où elle est portée jusqu'à ce qu'elle s'attache, grâce à une boucle appropriée (4), à un des boutons (6), placé sur la même boucle.

3. Chaussures en plastique créées par un moulage sous pression comme affirmé dans la revendication 1, **caractérisé en ce que** ladite boucle (4) soit faite dans un moule unique dans un matériel en plastique plus dur à manier que celui utilisé pour la chaussure et qui a une surface (8) comprenant un ou plusieurs boutons (6) pour attacher la sangle, un passant (7) et une boutonnière (5) pour l'insertion du bouton (2)

4. Chaussures en plastique créées par un moulage sous pression comme affirmé dans la revendication1, **caractérisé en ce que** le bouton saillant (2), réalisé par un moulage sous pression avec la chaussure, peut avoir n'importe quelle forme tant qu'il entre dans la boutonnière (5) sur la boucle.

5. Chaussure en plastique créée par un moulage sous pression comme affirmé dans la revendication 1, **caractérisé en ce que** le bouton qui est fait par un corps et une tête saillante, plus grande que le corps et qui grâce au matériel élastique dont il est fait, entre de façon parfaite dans la boutonnière (5) s'étendant plus tard plus loin et fermant la boucle.
